Europäisches Patentamt

(19) European Patent Office

Office européen des brevets

(11) Numéro de publication: **0 042 324**
**B1**

(12) **FASCICULE DE BREVET EUROPEEN**

(51) Int. Cl.³: **G 02 B 23/12,** G 02 B 23/18, G 02 B 27/14

(45) Date de publication du fascicule du brevet:
**08.08.84**

(21) Numéro de dépôt: **81400900.7**

(22) Date de dépôt: **05.06.81**

(54) Dispositif d'observation binoculaire notamment pour une lunette.

(30) Priorité: **12.06.80 FR 8013085**

(43) Date de publication de la demande:
**23.12.81 Bulletin 81/51**

(45) Mention de la délivrance du brevet:
**08.08.84 Bulletin 84/32**

(84) Etats contractants désignés:
**AT BE CH DE GB IT LI LU NL SE**

(56) Documents cités:
**DE - A - 1 497 524**
**DE - B - 1 217 099**
**DE - C - 596 913**
**FR - A - 2 123 564**
**GB - A - 2 021 803**

(73) Titulaire: **SOCIETE D'OPTIQUE, PRECISION ELECTRONIQUE ET MECANIQUE - SOPELEM, 102 rue Chaptal, F-92300 Levallois-Perret (FR)**

(72) Inventeur: **Baluteau, Jean-Michel, 77 Allée de Chartres, F-93190 Livry-Gargan (FR)**

(74) Mandataire: **Saint-Martin, René et al, CREUSOT-LOIRE 15 rue Pasquier, F-75383 Paris Cedex 08 (FR)**

# Description

La présente invention se rapporte à un dispositif d'observation binoculaire d'une seule image et à l'application de ce dispositif à une lunette à un seul objectif destinée à l'observation diurne ou nocturne.

Les binoculaires tels que ceux montés par exemple sur les microscopes comprennent habituellement deux prismes rhomboïdaux donnant deux faisceaux écartés de la distance interpupillaire et observés par les oculaires. Ce système convient bien lorsqu'on veut observer une image aérienne qui se forme dans les verres des prismes rhomboïdaux. Ce système n'est pas satisfaisant lorsqu'on veut observer avec une courte focale d'oculaire une image réelle.

On connaît également des systèmes d'observation binoculaire ne comportant qu'un seul système optique donnant deux faisceaux à la distance interpupillaire pouvant être observés directement. Ces systèmes binoculaires ont des limites car il n'autorisent pas de courtes focales sans que l'observation ne soit difficile. Par ailleurs, la correction des aberrations est difficile.

Il existe dans le domaine de l'observation nocturne un instrument décrit dans le brevet FR-A-2 123 564 permettant d'observer avec les deux yeux. Cet instrument constitue une jumelle ayant deux lunettes indépendantes.

La présente invention a pour objet un dispositif binoculaire pour observer une seule image réelle ou aérienne avec une courte focale. De ce fait l'encombrement est réduit. Ce dispositif permet le réglage de l'écart d'yeux et le réglage de la mise au point. Il peut être associé à une lunette à un seul objectif notamment à une lunette pour l'observation nocturne de manière à constituer un instrument léger et portable et à bas prix de revient.

Le dispositif qui permet d'observer une image réelle ou aérienne centrée sur un axe optique est essentiellement caractérisé par le fait qu'il comporte un élément optique pourvu d'une surface semi-réfléchissante laissant passer la lumière issue de l'image vers un oculaire convergent et déviant l'autre partie de lumière sur un groupe convergent de lentilles ayant sensiblement la même distance focale que celle de l'oculaire et centré sur un axe optique frontal, oblique par rapport à l'axe optique dudit oculaire, ce groupe de lentilles étant suivi par un réflecteur en arrière duquel l'axe optique réfléchi est décalé de la distance interpupillaire par rapport à cet axe dudit oculaire, les foyers objets de l'oculaire et du groupe de lentilles étant sensiblement confondus.

Selon une caractéristique l'oculaire est disposé de manière que son axe soit coaxial à l'axe sur lequel est centrée l'image et qu'il soit séparé par un intervalle d'air de l'élément optique.

Suivant une caractéristique de l'invention, le réflecteur est composé d'un prisme, d'une lame à faces parallèles accolée à la face avant de ce prisme et d'une lame à faces parallèles accolée à la face arrière de ce prisme.

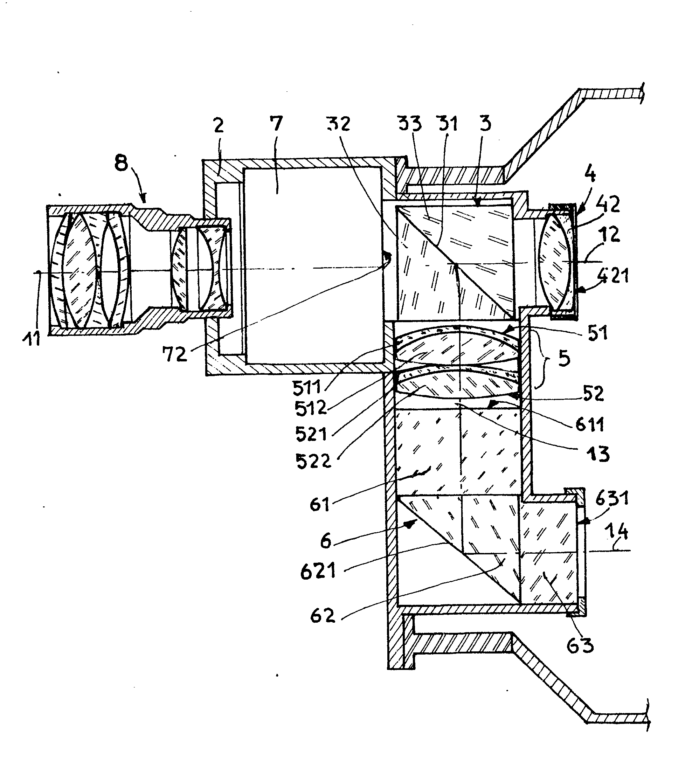

L'invention va maintenant être décrite avec plus de détails en se référant à un mode de réalisation donné à titre d'exemple et représenté par le dessin annexé.

La figure unique est une coupe axiale d'un dispositif binoculaire selon l'invention.

Le dispositif binoculaire qui est représenté par la figure sert à l'examen d'une image réelle 72. Il est monté dans un boîtier 2 et il comprend deux oculaires qui donnent deux faisceaux centrés sur deux axes parallèles 12 et 14 séparés de la distance interpupillaire.

Le faisceau lumineux provenant de l'image observée 72 est centré sur un axe 11 dit principal. Le faisceau limineux provenant de l'image est reçu par un élément optique semi-réfléchissant 3 qui laisse passer le faisceau suivant l'axe optique 12 et qui dévie le faisceau suivant l'axe optique frontal oblique 13. Cet élément optique est pourvu d'une surface semi-réfléchissante 31 qui laisse passer la lumière suivant l'axe 12 coaxial à 11. Cette surface 31 est positionnée à 45° de l'axe optique 11, l'axe réfléchi 13 étant perpendiculaire à 11 et 12. L'élément 3 est composé par exemple de deux prismes rectangles isocèles 32 et 33 montés de manière à constituer un cube dont la surface semi-réfléchissante 31 passe par deux arrêtes parallèles. Une partie de la lumière traverse l'élément optique semi-réfléchissant 3 pour aller vers l'oculaire 4. Une autre partie de la lumière est réfléchie suivant l'axe optique frontal 13.

L'oculaire convergent 4 centré sur l'axe 12 est monté derrière l'élément 3 en étant séparé par un espace d'air du prisme 33. Cet oculaire est, dans le mode de réalisation représenté, formé par un doublet comprenant vers l'avant une lentille convergente 41 et vers l'arrière une lentille divergente 42, les deux lentilles étant accolées l'une à l'autre. De préférence l'oeil directeur observe directement derrière cet oculaire 4.

Le second oculaire comprend un groupe ou système convergent de lentilles 5 centré sur l'axe frontal 13 et un réflecteur 6 servant à translater l'image donnée par le système de lentilles et à réfléchir de faisceau lumineux de l'axe frontal 13 à l'axe 14. Le groupe de lentilles 5 est composé par exemple vers l'avant d'un doublet convergent 51 séparé par un intervalle d'air du prisme 32 et vers l'arrière d'un doublet convergent 52. Chaque doublet est composé vers l'avant d'une lentille divergente 511 ou 521 et vers l'arrière d'une lentille convergente 512 ou 522, les deux lentilles étant accolées l'une à l'autre. Cette structure à deux doublets favorise la correction des aberrations.

Les foyers objets de l'oculaire 4 et du système de lentilles sont confondus. Le diamètre des lentilles du système est supérieur au diamètre des lentilles du doublet 4.

Le réflecteur 6, est disposé en arrière du système de lentilles 5 dont il est séparé par un intervalle d'air. Ce réflecteur qui constitue une traversée continue de verre, rapproche la pupille de sortie du système 5 par une réflexion sur la surface réfléchissante 621 réfléchit l'axe optique de 13 à 14. Ce réflecteur a de préférence une puissance nulle. Il comprend à l'entrée un dioptre plan 611 perpendiculaire à 13 et à la sortie un dioptre plan 631 perpendiculaire à 14. La surface réfléchissante 621 est inclinée à 45° par rapport à l'axe frontal 43. Elle est parallèle à la surface semi-réfléchissante 31 de manière que l'axe optique principal incident 11 à la surface 31 et l'axe optique féfléchi 14 soient parallèles et décalés latéralement. Ce réflecteur 6 se décompose par exemple en une lame à faces parallèles 61 centrée sur l'axe frontal 13, en un prisme réflecteur 62 et en une lame à faces parallèles 63 centrée sur l'axe optique latéral 14. Le prisme 62 est un prisme rectangle isocèle à réflexion totale. La lame à face parallèles 61 qui est positionnée perpendiculairement à l'axe 13, entre le prisme 62 et le groupe convergent de lentilles 5 est accolée à la face avant du prisme 62 et elle est séparée par un intervalle d'air du groupe de lentilles 5. La lame à faces parallèles 63 qui est positionnée perpendiculairement à l'axe 14 est accolée à la face arrière du prisme 62. La traversée de verre dans l'ensemble 6 apporte une translation de la pupille vers le système 5 et un champ plus grand. Le dioptre plan 631 est sensiblement situé à la même distance de l'axe 13 que le dioptre arrière 421 de la lentille 42 de l'oculaire 4.

Le réglage de l'écart d'yeux peut s'effectuer par déplacement relatif selon l'axe 13 du réflecteur 5—6. La mise au point s'effectue par l'oculaire 4 et par déplacement relatif du dispositif par rapport à l'image.

Le dispositif binoculaire décrit ci-dessus sert à observer une image réelle. En particulier ce dispositif binoculaire peut être associé à une lunette pourvue d'un tube à intensification de luminance telle que représentée sur la figure annexée. Il permet alors d'observer l'image formée sur la sortie 72 du tube à intensification de luminance 7 qui est au foyer de l'oculaire 4 et du système de lentilles 5. Ce tube 7 est monté à l'arrière d'un objectif 8 qui est centré sur l'axe optique principal 11 coaxial à l'axe 12 de l'oculaire 4. L'image fournie par l'objectif 8 est reçue à l'entrée de tube à intensification de luminance.

Il est bien entendu que l'on peut sans sortir du cadre de l'invention imaginer des variantes et des perfectionnement de détails et de même envisager l'emploi de moyens équivalents.

Ainsi le réflecteur 6 pourrait être réalisé de manière monobloc.

## Revendications

1. Dispositif d'observation binoculaire d'une image réelle ou aérienne (72) centrée sur un axe optique (11) caractérisé par le fait qu'il comporte un élément optique (3) pourvu d'une surface semi-réfléchissante (31) laissant passer une partie de la lumière issue de l'image (72) vers un oculaire convergent (4) et déviant l'autre partie de la lumière sur un groupe convergent de lentilles (5) ayant sensiblement la même distance focale que celle de l'oculaire (4) et centré sur un axe optique frontal (13) oblique par rapport à l'axe optique (12) du dit oculaire, ce groupe de lentilles (5) étant suivi par un réflecteur (6) en arrière duquel l'axe optique réfléchi (14) est décalé de la distance interpupillaire par rapport à cet axe (12) du dit oculaire, les foyers objets de l'oculaire (4) et du groupe de lentilles (5) étant sensiblement confondus sur l'image (72).

2. Dispositif selon la revendication 1 caractérisé par le fait que l'oculaire (4) est disposé de manière que son axe (12) soit coaxial à l'axe (11) sur lequel est centrée l'image (72) et qu'il soit séparé par un intervalle d'air de l'élément optique (3).

3. Dispositif selon l'une quelconque des revendications précédentes caractérisé par le fait que l'élément optique (3) est constitué de deux prismes (32, 33) qui forment un cube et entre lesquels est formée la surface semi-réfléchissante (31).

4. Dispositif selon la revendication l'une quelconque des revendications précédentes caractérisé par le fait que le réflecteur (6) forme à la sortie un dioptre plan situé par rapport à l'axe frontal (13), à une distance sensiblement égale à celle du dioptre arrière de l'oculaire convergent (4).

5. Dispositif selon l'une quelconque des revendications précédentes, caractérisé par le fait que le réflecteur (6) est composé d'un prisme (62), d'une lame à faces parallèles (61) centrée sur l'axe optique frontal (13) et accolée à la face avant de ce prisme (62) et d'une lame à faces parallèles (63) centrée sur l'axe optique réfléchi (14) et accolée à la face arrière du prisme (62).

6. Dispositif selon l'une quelconque des revendications précédentes caractérisé par le fait que le groupe convergent de lentilles (5) est composé de deux doublets convergents (51—52) formés chacun vers l'avant d'une lentille divergente, (511, 521) et vers l'arrière d'une lentille convergente (512, 522), ces deux lentilles étant accolées l'une à l'autre.

7. Dispositif selon l'une quelconque des revendications précédentes caractérisé par le fait qu'il est associé à un tube à intensification de luminance (7) monté à l'arrière d'un objectif (8) de manière à observer l'image (72) formée sur la sortie de ce tube.

## Patentansprüche

1. Vorrichtung zur binokularen Betrachtung eines reellen Bildes (72), das auf einer optischen Achse (11) zentriert ist, dadurch gekennzeichnet, daß sie ein optisches Element (3) aufweist, das mit einer semireflektierenden Oberfläche (31) versehen ist, die eine Teilmenge des vom Bild (72) ausgehenden Lichtes zu einem konvergierenden Okular (4) durchläßt und die andere Teilmenge des Lichtes auf eine konvergierende Gruppe von Linsen (5) ablenkt, die annähernd den gleichen Brennpunktabstand aufweist wie das Okular (4) und auf einer optischen Frontalachse (13) zentriert ist, die in bezug auf die optische Achse (12) des Okulars geneigt bzw. quer verläuft, wobei der Gruppe von Linsen (5) ein Reflektor (6) nachgeordnet ist, hinter welchem die optische Reflexionsachse (14) gegenüber der Achse (12) des Okulars um den Abstand zwischen den Pupillen versetzt ist, und daß die Gegenstandsbrennpunkte des Okulars (4) und der Gruppe von Linsen (5) auf dem Bild (72) annähernd zusammenfallen.

2. Vorrichtung nach Anspruch 1, dadurch gekennzeichnet, daß das Okular (4) so angeordnet ist, daß seine Achse (12) koaxial in bezug auf die Achse (11) verläuft, auf welcher das Bild (72) zentriert ist und daß es vom optischen Element (3) durch einen Luftraum getrennt ist.

3. Vorrichtung nach einem der vorhergehenden Ansprüche, dadurch gekennzeichnet, daß das optische Element (3) aus zwei Prismen (32, 33) besteht, die einen Würfel bilden und zwischen welchen die semireflektierende Fläche (31) ausgebildet ist.

4. Vorrichtung nach einem der vorhergehenden Ansprüche, dadurch gekennzeichnet, daß der Reflektor (6) am Ausgang ein planes bzw. ebenes Diopter bildet, das in bezug auf die Frontalachse (13) in einem Abstand angeordnet ist, der annähernd gleich demjenigen des hinteren Diopters des konvergierenden Okulars (4) ist.

5. Vorrichtung nach einem der vorhergehenden Ansprüche, dadurch gekennzeichnet, daß der Reflektor (6) aus einem Prisma (62), einer dünnen Platte mit parallelen Oberflächen (61), die auf der optischen Frontalachse (13) zentriert und an der Vorderfläche dieses Prismas (62) angeklebt bzw. befestigt ist, und aus einer dünnen Platte mit parallelen Oberflächen (63) besteht, die auf der optischen Reflexionsfläche (14) zentriert und an der Hinterfläche des Prismas (62) angebaut ist bzw. berührend anschließt.

6. Vorrichtung nach einem der vorhergehenden Ansprüche, dadurch gekennzeichnet, daß die konvergierende Gruppe von Linsen (5) aus zwei konvergierenden Doppellinsen (51, 52) besteht, von welchen jede auf der Vorderseite von einer divergierenden Linse (511, 521) und auf der Hinterseite von einer konvergierenden Linse (512, 522) gebildet ist, welche beiden Linsen jeweils aneinander angebaut sind bzw. berührend nebeneinander angeordnet sind.

7. Vorrichtung nach einem der vorhergehenden Ansprüche, dadurch gekennzeichnet, daß sie einer Bildhelligskeits-Verstärkungs-Röhre (7) zugeordnet ist, die hinter einem Objektiv (8) so montiert ist, daß das am Ausgang dieser Röhre entstandene Bild (72) betrachtet werden kann.

## Claims

1. Device for binocular observation of a real or aerial image (72) centered on an optical axis (11), characterised in that it comprises an optical element (3) provided with a semi-reflecting surface (31) allowing a part of the light from the image (72) to pass towards a converging eyepiece (4) and diverting the other part of the light to a converging group of lenses (5) having substantially the same focal length as that of the eyepiece (4) and centered on a front optical axis (13) which is oblique relative to the optical axis (12) of the said eyepiece, this group of lenses (5) being followed by a reflector (6) behind which the reflected optical axis (14) is offset by the interpupilar distance relative to this axis (12) of the said eyepiece, the object foci of the eyepiece (4) and of the group of lenses (5) being substantially coincident on the image (72).

2. Device according to claim 1, characterised in that the eyepiece (4) is arranged so that its axis (12) is coaxial to the axis (11) on which the image (72) is centered and that it is separated from the optical element (3) by an air space.

3. Device according to either one of the preceding claims, characterised in that the optical element (3) consists of two prisms (32, 33) which form a cube and between which the semi-reflecting surface (31) is formed.

4. Device according to any one of the preceding claims, characterised in that the reflector (6) forms at the exit a flat diopter situated, relative to the front axis (13), at a distance which is substantially equal to that of the rear diopter of the converging eyepiece (4).

5. Device according to any one of the preceding claims, characterised in that the reflector (6) consists of a prism (62), a lamina with parallel faces (61) which is centered on the front optical axis (13) and placed against the front face of this prism (62) and a lamina with parallel faces (63) centered on the reflected optical axis (14) and placed against the rear face of the prism (62).

6. Device according to any one of the preceding claims, characterised in that the converging group of lenses (5) consists of two converging doublets (51—52) each formed towards the front of a diverging lens (511, 521), and towards the rear of a converging lens (512, 522), these two lenses being placed against each other.

7. Device according to any one of the preceding claims, characterised in that it is associated with a luminance-intensifying tube (7) mounted behind an objective (8) so as to observe the image (72) formed at the exit of this tube.